# DEMANDE DE BREVET EUROPEEN

(11) **EP 1 096 079 A1**
(43) Date de publication de la demande: **02.05.2001**
(21) Numéro de dépôt: 00402582.1
(22) Date de dépôt: 19.09.2000
(51) Int. Cl.: E04F 15/18, E04F 15/02, F24D 3/14

(54) **Plaque moulée thermiquement et/ou phoniquement isolante et son procédé de fabrication**

(30) Priorité: 29.10.1999 FR 9913584
(71) Demandeur: ISOBOX TECHNOLOGIES, 92024 Nanterre Cedex (FR)
(72) Inventeur: Barbarit, André, 94120 Fontenay-Sous-Bois (FR)
(74) Mandataire: Jacquard, Philippe Jean-Luc

(57) **Abrégé**

L'invention concerne une plaque en matériau isolant. Cette plaque est munie d'au moins un premier plot (3). Elle est destinée à entrer dans la composition d'un assemblage de plaques du même type, apte à recevoir au moins un tube (22). Le premier plot (3) comporte au moins une région de verrouillage (15), le tube (22) étant destiné à être encliqueté entre cette région de verrouillage (15) du premier plot (3) et un second plot (3) adjacent au premier. Ladite région de verrouillage (15) comporte au moins une lame élastique (18) délimitée par une surface de verrouillage (16) située à la périphérie du premier plot (3) et destinée à coopérer au moins partiellement avec le tube (22), et une paroi (6) d'une cavité (17) ménagée dans le premier plot (3).

L'invention concerne également un procédé de fabrication par moulage d'une plaque dans un moule en deux parties.

## Description

L'invention concerne une plaque en matériau thermiquement et/ou phoniquement isolant, tel que du polystyrène expansé, destinée à entrer dans la composition d'un assemblage de plaques du même type pour couvrir une surface. Ces plaques présentent des plots de maintien de tuyaux de transport de fluides, notamment des tuyaux de chauffage entrant dans la réalisation de systèmes de chauffage par le sol, et peuvent en particulier être mises en oeuvre dans la fabrication de dalles flottantes.

En effet, une dalle flottante incorporant un dispositif de chauffage par le sol peut être réalisée de la manière suivante. On commence par couvrir la surface destinée à recevoir ladite dalle par des plaques en matériau thermiquement et/ou phoniquement isolant, tel que du polystyrène expansé. Ensuite, on équipe cette surface d'un réseau de tubes destiné à être parcouru par une circulation de fluide qui assurera le chauffage par le sol, laquelle circulation peut également servir à refroidir ou à assurer une climatisation, selon la température du fluide. Enfin, on coule sur les plaques recouvrant la surface une couche de ciment de quelques centimètres d'épaisseur dans laquelle sont noyés les tuyaux.

Le parcours du réseau de tubes présente des portions droites et des portions courbes afin d'obtenir une répartition la plus homogène possible du chauffage sur la surface considérée. Lors de sa mise en place, et jusqu'à la prise du ciment, les tuyaux doivent être maintenus en position.

Une première solution consiste à disposer les tubes entre des plots, de telle sorte que la surface de contact entre les tubes et les plaques isolantes soit importante, les frottements assurant le maintien, ce qui, malheureusement, réduit en proportion l'efficacité du chauffage.

Dans une solution alternative décrite par exemple dans le Brevet allemand DE-35 09 423 (ROTH WERKE), les tubes sont maintenus en surélévation par des clips enfoncés dans les plaques. Ce dispositif permet de pallier le problème précité, puisqu'il améliore l'efficacité du chauffage. Cependant la pose est alors plus compliquée, et, par conséquent, plus longue et notablement plus coûteuse.

Aussi, dans une autre solution, on propose de munir les plots, à leurs extrémités supérieures, de becs. Les tubes sont alors encliquetés entre des paires de plots adjacents et sont ainsi retenus par les becs qui se referment sur eux de manière à les empêcher de sortir de leurs logements. Dès lors, il est possible de concevoir des plots dont la forme est telle que la surface de contact entre les plaques isolantes et les tubes soit aussi réduite que possible. Une telle solution est développée dans le Brevet français FR-2 746 426 (ISOBOX TECHNOLOGIES). Néanmoins, ces becs compliquent la fabrication des plaques, notamment lorsqu'elles sont obtenues par moulage. En effet, ils constituent une contre-dépouille. Le Brevet français FR-2 746 426 précité propose la solution suivante pour fabriquer de telles plaques dans un moule en cieux parties. Il s'agit d'effectuer le démoulage à une température choisie pour que le matériau conserve une certaine viscosité propice à son fluage. Les moules doivent être conçus pour que soient intégrées, dans la forme finale des plaques, les déformations résultant de ce fluage, notamment au niveau des becs.

La présente invention constitue une alternative à la dernière des solutions précitées, qui vise à pallier les inconvénients des autres et présente l'avantage de proposer une plaque sans contre-dépouille réalisable dans un moule en deux parties par un procédé de moulage classique.

L'invention a donc pour objectif d'offrir une plaque dans laquelle des tubes peuvent être encliquetés et maintenus en place, que ces tubes présentent des portions droites ou courbes, tout en minimisant la surface de contact entre les tubes et la plaque, ne nécessitant pas le recours à des dispositifs de maintien additionnels tels que des clips et étant réalisable dans un moule en deux parties par un procédé de moulage classique.

A cet effet, l'invention propose une plaque en matériau thermiquement et/ou phoniquement isolant, munie d'au moins un premier plot et destinée à entrer dans la composition d'un assemblage de plaques du même type pour couvrir une surface apte à recevoir au moins un tube de transport de fluide qui est encliqueté entre le premier plot et un second plot adjacent au premier, lesquels plots sont situés soit sur la même plaque, soit l'un sur une première plaque et l'autre sur une seconde plaque adjacente à la première, caractérisé en ce qu'au moins le premier plot comporte au moins une région de verrouillage, le tube étant destiné à être encliqueté entre cette région de verrouillage du premier plot et le second plot, ladite région de verrouillage comportant au moins une lame élastique délimitée par une surface de verrouillage située à la périphérie du premier plot et destinée à coopérer au moins partiellement avec le tube, et une paroi d'une cavité ménagée dans le premier plot.

L'invention présente plusieurs avantages.

En premier lieu, le pincement des tubes encliquetés dans une plaque selon l'invention est amélioré par rapport à celui qui est obtenu dans les dispositifs précédemment décrits qui comportent des becs. En effet, la lame élastique conserve assez d'élasticité, après déformation, pour continuer à exercer une certaine pression sur le tube.

L'invention permet également de concevoir des plaques dans lesquelles on peut verrouiller une gamme de tubes dont les diamètres couvrent une plage plus étendue. Cet avantage est, lui aussi, lié à l'élasticité de la lame élastique.

Il est particulièrement avantageux que ladite cavité débouche seulement sur la face de la plaque opposée à celle qui porte ledit plot.

La face de la plaque portant les plots étant plus simple, et notamment sans contre-dépouille, il est plus facile d'y appliquer un traitement de surface, par exemple un pelliculage. Cela constitue encore un avantage.

Avantageusement, cette cavité peut présenter une forme sensiblement tronconique qui s'évase en direction de la face de la plaque opposée à celle qui porte ledit plot ou une forme sensiblement obtenue par la juxtaposition d'au moins deux troncs de cônes dans le prolongement l'un de l'autre, lesquels troncs de cônes s'évasent en direction de la face opposée à celle qui porte ledit plot et sont raccordés l'un à l'autre par une surface de raccordement progressif, la lame élastique étant délimitée par ladite surface de verrouillage et par une paroi du tronc de cône dont la section selon un plan transverse au plot présente la plus petite surface.

Les dimensions de la cavité peuvent être déterminées pour que la lame élastique, repoussée par le tube que l'on encliquette, vienne en butée, le cas échéant, contre au moins une paroi de ladite cavité avant de pouvoir céder.

Cette même cavité peut également présenter, dans la zone de la lame élastique, une section selon un plan transverse au plot dans lequel elle est ménagée, qui est allongée selon une direction sensiblement parallèle à l'axe d'un tube encliqueté au moyen de la région de verrouillage du premier plot.

L'invention concerne également un procédé de fabrication par moulage d'une plaque telle qu'elle vient d'être définie. Il comporte une étape dans laquelle une matière est introduite dans un moule, par exemple sous forme de billes de polystyrène pré-expansées à la densité voulue et prêtes pour l'opération de moulage, une étape de prise du matériau, une étape de démoulage de la plaque et une éventuelle étape de pelliculage de la face qui porte les plots. Le moulage peut avantageusement être effectué dans un moule en deux parties, la première partie de ce moule pouvant présenter une première empreinte complémentaire, aux retraits près, de la face de la plaque portant ledit plot, et la seconde partie de ce moule pouvant présenter une seconde empreinte complémentaire, aux retraits près, de la face de la plaque opposée à celle portant ledit plot.

Les plots représentent une certaine masse de matière qui, dans le cas des moulages à chaud, doit refroidir. La présence d'une cavité dans le plot réduit d'autant la matière à refroidir. En outre, la ou les zones du moule de formes complémentaires, aux retraits près, de cette cavité améliorent le refroidissement en raison de la chaleur qu'elles permettent d'évacuer.

Avantageusement, la cavité dont l'une des parois participe à la définition de la zone de verrouillage est obtenue au moyen de la partie du moule qui présente l'empreinte complémentaire, aux retraits près, de la face de la plaque opposée à celle portant ledit plot. Il est dès lors possible de changer les caractéristiques de cette cavité, et donc celles de la lame élastique, en ne changeant qu'une seule des deux parties du moule. Ainsi, on peut facilement envisager plusieurs combinaisons dans l'assemblage des deux parties du moule qui permettent d'obtenir des plaques dont les régions d'encliquetage possèdent des caractéristiques différentes, ce qui constitue un autre avantage de l'invention. De cette manière, on peut également prévoir une production plus flexible.

D'autres caractéristiques et avantages de l'invention ressortiront à la lecture de la description qui va suivre, donnée à titre d'exemple non limitatif, en liaison avec les dessins dans lesquels :
- la figure 1 est une vue partielle, en perspective, par la face qui porte les plots, d'une plaque selon un premier mode de réalisation de l'invention ;
- la figure 2 est une autre vue partielle, en perspective, par la face opposée à celle qui porte les plots, de la même plaque ;
- la figure 3 est une vue partielle, en plan, du côté des plots, de la même plaque ;
- la figure 4 est une vue schématique, en plan, d'une plaque pouvant incorporer l'invention selon l'un quelconque de ses modes de réalisation ;
- la figure 5 est une coupe partielle selon la ligne V-V de la figure 3 ;
- la figure 6a est une coupe identique à celle de la figure 4 représentant un second mode de réalisation de l'invention ;
- la figure 6b est une coupe identique à celle de la figure 6a, de la même plaque, et dans laquelle un tube est encliqueté entre une paire de plots de la plaque ;
- et la figure 7 est une coupe selon la ligne VII-VII de la figure 6a.

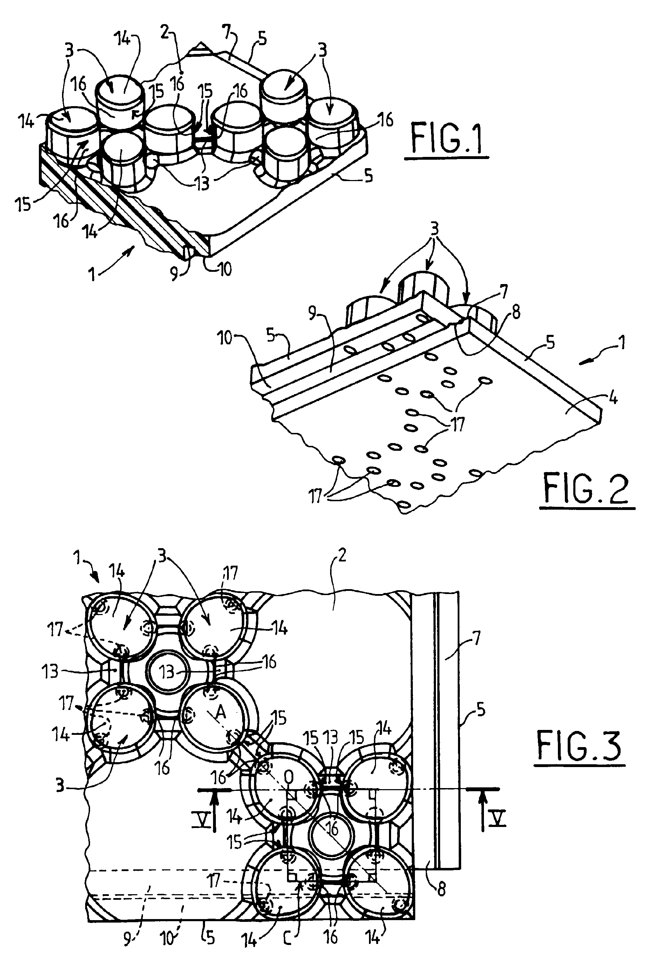

Selon les figures 1 à 3, une plaque 1 de forme sensiblement parallélépipédique possède une première face 2 munie de plots 3, une seconde face 4, sensiblement parallèle à la première, et quatre cotés 5 reliant ces deux faces.

La plaque 1 est destinée à entrer dans un assemblage de plaques 1 identiques à elle, dans lequel les plaques 1 sont assemblées par leurs côtés 5 pour couvrir une surface, les plots 3 étant tournés vers l'extérieur de la surface couverte. A cet effet, les côtés 5 de la plaque sont munis de moyens d'accrochage. Ils lui permettent d'être emboîtée par ses côtés 5 à une plaque 1 adjacente munie de moyens de forme complémentaire. Chaque côté 5 est muni d'une rainure et d'une nervure, lesquelles le longent. Elles sont tournées vers l'une des faces 2,4 de la plaque 1. La rainure et le côté 5 qui en est pourvu définissent entre eux la nervure, qui se situe en deçà de la surface plane de la face 2,4 vers laquelle elle est tournée. L'ensemble possède ainsi un profil en forme de bec. Les nervures 7 et les rainures 8 de deux des côtés sont tournées vers la face 2 de la plaque 1 qui porte les plots 3 et sont de formes complémentaires, respectivement, aux rainures 9 et aux nervures 10 des deux autres côtés 5, qui, elles, sont tournées vers l'autre face 4. Pour assembler une première et une seconde plaques 1 par leurs côtés 5, on emboîte une nervure 7 de la première plaque 1 et une nervure 10 de la seconde plaque 1 dans, respectivement, une rainure 9 de la seconde plaque 1 et une rainure 8 de la première plaque 1, les rainures d'une part, et les nervures d'autre part, étant de formes complémentaires.

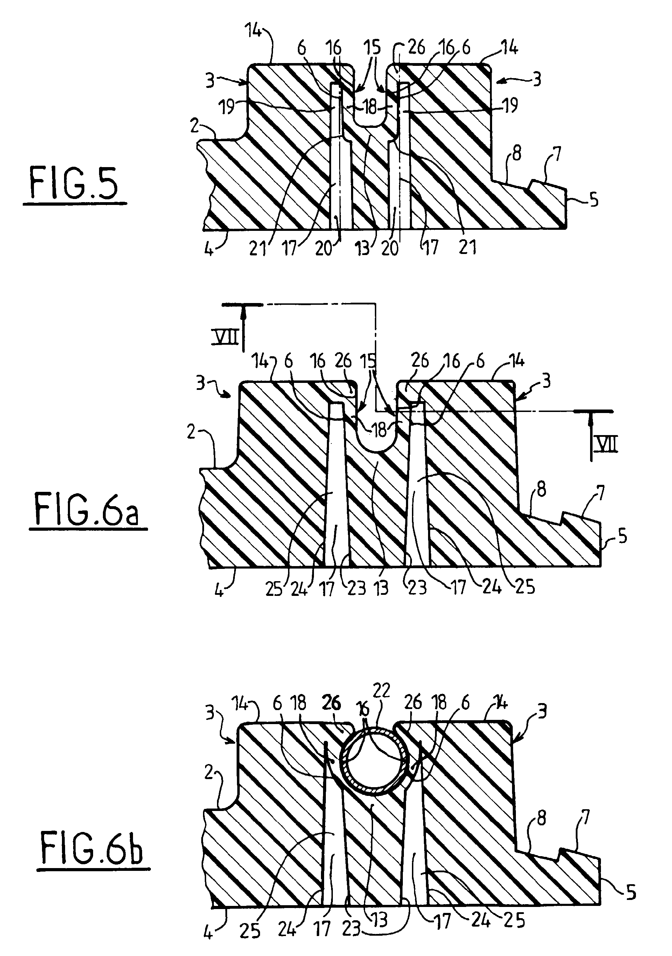

Les plots 3 sont disposés par groupes formant un motif élémentaire 11. Sur la figure 4, on visualise le dessin formé par les plots 3 sur une plaque 1 entière. Les motifs élémentaires 11, qui sont chacun constitués par quatre plots 3 disposés aux quatre coins d'un carré C, y sont disposés en quinconce de telle sorte qu'ils s'y trouvent régulièrement répétés selon les deux dimensions de la plaque 1, à la manière d'un damier alternant les motifs élémentaires 11 et les espaces 12 dénués de plots 3. Une fois que l'on a réalisé l'assemblage des plaques 1, on peut y disposer des tubes pour constituer un réseau, notamment pour le chauffage par le sol. Les tubes sont encliquetés sur les plaques 1 entre des paires de plots 3 adjacents qui assurent leur maintien. Les deux plots 3 aux coins d'un même côté d'un carré C sont destinés à maintenir encliqueté entre eux un tube. Il en est de même de la paire qui regroupe les deux plots 3 adjacents de deux carrés C adjacents. L'axe A qui joint ces deux plots 3 forme un angle de 45° avec les côtés du carré C dont il est une diagonale. D'une manière générale, deux plots 3 destinés à collaborer au maintien d'un tube sont reliés par un pontet de surélévation 13 qui sert à maintenir les tubes à une certaine distance de la plaque 1, afin de minimiser la surface de contact entre la plaque 1 et le tube. Ces pontets de surélévation 13 permettent de bien visualiser les paires de plots 3 aptes au verrouillage de tubes. Les tubes peuvent être encliquetés, sur les plaques 1 assemblées, en ligne droite selon quatre directions séparées par des angles de 45°, et/ou suivant des coudes.

Pour le transport, les plaques 1 sont transportées par paires montées tête-bêche avec les surfaces 2 se faisant face, les quatre plots 3 formant un motif élémentaire 11 venant dans les espaces 12 dénués de plots 3.

Les plots 3, tous semblables, présentent une forme sensiblement cylindrique de section transversale non circulaire. Ils s'étendent selon une direction sensiblement perpendiculaire aux faces de la plaque. Ils s'évasent à leurs bases et sont dotés d'une surface plane 14 à leur extrémité libre, laquelle est chanfreinée. Les tubes sont destinés à être verrouillés entre une première région de verrouillage 15 d'un plot 3 et une seconde région de verrouillage 15 d'un autre plot 3, en regard de la première. Chaque plot 3 est situé au sommet O d'un carré C. Un plot 3 pouvant collaborer avec trois autres plots 3 pour maintenir un tube, il possède trois régions de verrouillage 15. Deux d'entre elles sont situées sur les côtés du carré C passant par le sommet O, la troisième sur la diagonale A de ce même carré C passant par le même sommet O, à l'opposé du centre du carré. Au niveau des régions de verrouillage 15, la surface latérale du plot, ou surface de verrouillage 16, qui est destinée à coopérer, du moins partiellement, avec un tube, est convexe et régulière. Ces surfaces de verrouillages 16 sont rattachées entre elles par des surfaces latérales convexes et régulières. Le plot 3 est symétrique selon un plan P sensiblement perpendiculaire aux faces 2,4 de la plaque 1 et qui passe par la diagonale A au carré C passant par le sommet O sur lequel se trouve le plot 3. Il est également sensiblement allongé dans le sens de cette diagonale A.

La région de verrouillage 15 d'un plot comporte une surface de verrouillage 16, destinée à coopérer avec un tube, une cavité 17 interne au plot 3, et une lame élastique 18 délimitée par la surface de verrouillage 16 et par une paroi 6 de ladite cavité. La figure 5 présente, en section, deux régions de verrouillage 15 en vis à vis, selon un mode de réalisation, qui appartiennent à deux plots 3 adjacents et qui sont prévues pour collaborer au verrouillage d'un tube. Les deux surfaces de verrouillage 16 en regard l'une de l'autre sont sensiblement des secteurs de cylindres parallèles, sans qu'il s'agisse nécessairement de cylindres de révolution, convexes et réguliers. Vers la base des plots 3, les deux surfaces de verrouillage 16 en regard appartenant à deux plots 3 adjacents sont raccordées par un pontet de surélévation 13, qui présente une surface supérieure plane sensiblement parallèle aux faces 2,4 de la plaque 1 et dont le rôle a déjà été précisé. La cavité 17 qui participe à la région de verrouillage 15 présente la forme d'un premier tronc de cône 19 dans le voisinage de la surface de verrouillage 16. Ce premier tronc de cône 19 s'étend selon une direction sensiblement parallèle aux plots 3, de telle sorte que la lame élastique 18 présente une section selon un plan transverse au plot 3 sensiblement constante sur la hauteur de la surface de verrouillage 16. Il s'évase légèrement en direction de la face de la plaque dénuée de plots. La section de ce premier tronc de cône 19 selon un plan parallèle aux faces 2,4 de la plaque 1 présente la forme d'un demi-cercle orienté de façon à ce que le segment droit soit tourné vers la surface de verrouillage 16. Ainsi, la paroi 6 de la cavité 17 qui délimite l'une des faces de la lame élastique 18 est sensiblement plane. La cavité 17 ne débouche pas du côté de la face 2 portant les plots 3. Elle est prolongée en direction de la face 4 dénuée de plots 3 par un second tronc de cône 20, lequel débouche sur cette face 4. De section circulaire selon un plan parallèle aux faces 2,4 de la plaque 1, ce deuxième tronc de cône 20 s'étend dans le prolongement du premier, dans une direction sensiblement parallèle au plot 3. Il s'évase légèrement en direction de la face 4 de la plaque 1 sur laquelle il débouche. Le secteur circulaire du premier tronc de cône 19 et le second tronc de cône 20 s'appuient sur le même cône. Aussi, la forme de la cavité 17 entière est obtenue en retranchant à un tronc de cône sensiblement de révolution, à son extrémité la plus étroite et sur une partie de sa hauteur, sa moitié selon un de ses plans de symétrie. Le secteur plat du premier tronc de cône et le second tronc de cône se raccordent sous le pontet de surélévation 13 par une surface de raccordement progressif 21.

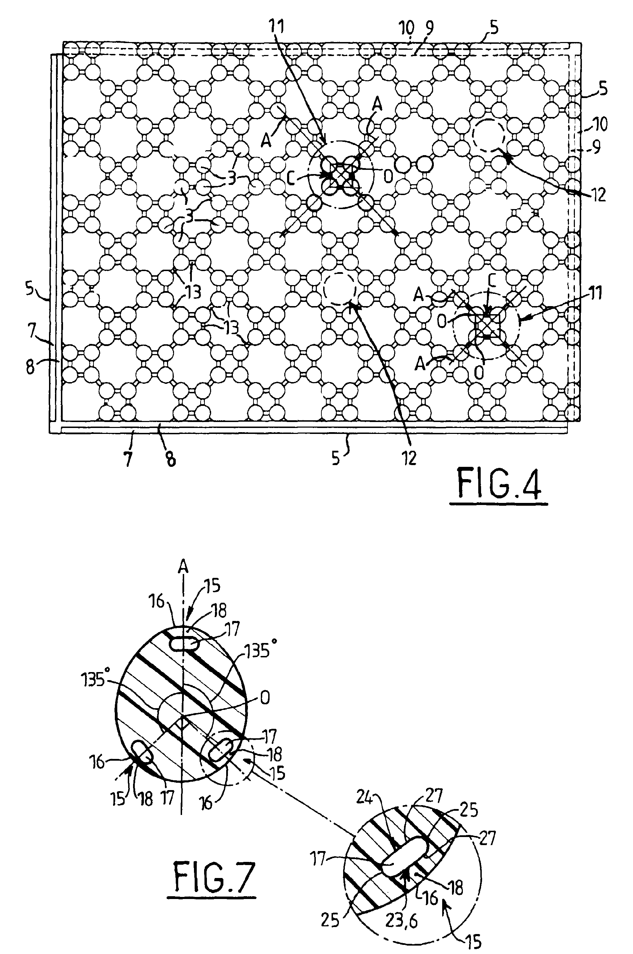

La figure 6a est une coupe similaire à celle de la figure 5, qui montre une variante de réalisation de la cavité 17. Celle-ci présente ici la forme d'un tronc de cône qui n'est pas de révolution et s'étend selon une direction sensiblement perpendiculaire aux faces 2,4 de la plaque 1. Elle débouche seulement sur celle des faces de la plaque 1 qui ne porte pas les plots 3 et s'évase en direction de cette même face 4. Deux de ses faces latérales 23,24 sont planes et en regard, et sont raccordées à leurs extrémités latérales par deux autres surfaces 25 en vis-à-vis présentant chacun la forme de deux demi troncs de cône de révolution dont la concavité est tournée vers l'intérieur de la cavité 17. Ainsi, la section de la cavité selon un plan parallèle aux faces 2,4 de la plaque 1, telle qu'on peut la voir sur la figure 7, présente la forme d'une courbe fermée constituée par deux demi-cercles en regard raccordés par deux segments droits 27, parallèles et de même longueur. La lame élastique 18 est délimitée par la surface de verrouillage 16 d'une part, et par l'une des surfaces planes 23 de la cavité 17 d'autre part.

Sur la figure 6b, un tube 22 de section circulaire a été encliqueté entre les régions de verrouillage 15 de deux plots 3 adjacents, du type de ceux représentés sur la figure 6a. Le tube 22 a été enfoncé entre les deux plots 3 jusqu'au pontet de surélévation 13 qui forme butée et retient ainsi le tube 22 en surélévation à une certaine distance de la surface 2 de la plaque 1. La paroi externe du tube 22 et les surfaces de verrouillage 16 sont en contact. Les deux lames élastiques 18 sont repoussées par le tube 22 et exercent en réponse une pression de maintien qui enserre celui-ci. Le tube 22 est également maintenu par les extrémités supérieures des plots 3 adjacents, lesquelles extrémités agissent de concert à la manière de deux becs 26 tournés l'un vers l'autre et qui repoussent le tube 22 vers la surface plane du pontet de surélévation 13, de sorte que, même si les lames élastiques 18 cèdent, le tube 22 sera néanmoins maintenu encliqueté. On peut donc dire que les lames élastiques 18 d'une part, et les extrémités supérieures des plots 3 d'autre part, concourent, mais de manière différente, au maintien des tubes 22, lequel maintien est, par conséquent, particulièrement efficace, notamment si on le compare à celui procuré par les moyens actuellement connus.

De plus, grâce à l'invention, on peut désormais concevoir une plaque 1 pouvant servir à l'encliquetage d'un ensemble de tubes couvrant une gamme de diamètres particulièrement étendue. En effet, la lame élastique 18 agit dès qu'elle est déformée. De plus, elle peut connaître des déformations plus importantes que celles qui sont obtenues par écrasement de la matière avec des plots classiques.

On peut également concevoir la cavité 17 pour éviter que la lame élastique 18 ne cède. En effet, cette lame élastique 18, lorsqu'elle est repoussée par un tube, se rapproche de la paroi 6 de la cavité 17 en vis-à-vis d'elle. Il suffit donc de prévoir une cavité 17 dont les dimensions sont telles que la lame élastique 18 repoussée par le tube rencontre cette paroi 6 de la cavité 17 en vis-à-vis d'elle avant de pouvoir casser.

De préférence, mais sans que cela soit limitatif, ces plaques 1 sont réalisées en polystyrène expansé. Elles peuvent alors être obtenues par un procédé connu en soi de moulage d'un tel matériau, procédé dans lequel ce sont des billes de polystyrène pré-expansées à la densité voulue et prêtes pour l'opération de moulage qui sont injectées. Elles présentent l'avantage non négligeable de pouvoir être fabriquées dans un moule en deux parties. La première partie sert au moulage de la face 2 de la plaque 1 qui porte les plots 3. La seconde partie présente une empreinte complémentaire, aux retraits près, de l'autre face 4 de la plaque 1, et, notamment, des extensions de formes complémentaires, aux retraits près, des cavités 17 des régions de verrouillage 15. Les gains de productivité liés à l'utilisation de moules en deux parties sont substantiels. L'utilisation d'autres matériaux pour la fabrication de la plaque 1 et/ou d'autres procédés de moulage peut être envisagée, sans sortir du cadre de l'invention.

Par ailleurs, les plots 3 représentent une certaine masse de matière qui doit refroidir lors du moulage. La présence de trois cavités 17 dans le plot 3 réduit d'autant la matière à refroidir. En outre, les excroissances du moule qui donnent leurs formes aux cavités 17 améliorent le refroidissement en raison de la chaleur qu'elles permettent d'évacuer.

On peut facilement, avec de tels moules, modifier les caractéristiques des régions de verrouillage 15. En effet, en changeant le moule qui participe à la définition de la face 4 de la plaque 1 sur laquelle débouchent les cavités 17, on peut facilement faire varier l'emplacement, la forme et les dimensions de ces cavités 17, ce qui permet de faire varier en conséquence la forme et les dimensions de la lame élastique 18. Plusieurs combinaisons dans l'assemblage des deux parties du moule permettent d'obtenir des plaques 1 dont les régions de verrouillage 15 possèdent des caractéristiques différentes. On peut donc envisager une production flexible de plaques 1 différentes.

Avantageusement, on effectue ensuite une opération de pelliculage de la face 2 de la plaque 1 qui porte les plots 3. Elle est facilitée par la forme des plots 3, car ceux-ci ne comportent aucune surface concave.

Comme on l'a déjà vu, les plaques 1 selon l'invention sont destinées à être assemblées par leurs côtés 5 pour couvrir une surface, notamment un sol. Sur l'assemblage ainsi réalisé, des tubes sont ensuite encliquetés pour former un réseau permettant la circulation d'un fluide. Enfin, on peut couler sur les plaques 1 une couche de ciment de quelques centimètres d'épaisseur dans laquelle sont noyés les tuyaux. Lors de leur mise en place, et jusqu'à la prise du ciment, les tuyaux sont maintenus en position entre les deux régions de verrouillage 15 de deux plots 3 adjacents. Une fois le ciment pris, on a ainsi obtenu une dalle flottante incorporant un dispositif permettant notamment le chauffage par le sol, mais aussi le refroidissement ou toute régulation de température envisageable avec un tel dispositif.

L'invention ne se limite pas au mode de réalisation qui vient d'être décrit, des modifications pouvant être apportées sans pour autant sortir de son cadre.

On peut notamment envisager pour les cavités 17 bien d'autres formes, ainsi que pour les plots 3 et les motifs élémentaires 11.

## Revendications

1. Plaque en matériau thermiquement et/ou phoniquement isolant, munie d'au moins un premier plot (3) et destinée à entrer dans la composition d'un assemblage de plaques du même type pour couvrir une surface apte à recevoir au moins un tube (22) de transport de fluide qui est encliqueté entre le premier plot (3) et un second plot (3) adjacent au premier, lesquels plots (3) sont situés soit sur la même plaque (1), soit l'un sur une première plaque et l'autre sur une seconde plaque adjacente à la première, caractérisé en ce qu'au moins le premier plot (3) comporte au moins une région de verrouillage (15), le tube (22) étant destiné à être encliqueté entre cette région de verrouillage (15) du premier plot (3) et le second plot (3), ladite région de verrouillage (15) comportant au moins une lame élastique (18) délimitée par une surface de verrouillage (16) située à la périphérie du premier plot (3) et destinée à coopérer au moins partiellement avec le tube (22), et au moins une paroi (6) d'une cavité (17) ménagée dans le premier plot (3).

2. Plaque selon la revendication 1, caractérisée en ce que ladite cavité (17) débouche seulement sur la face (4) de la plaque opposée à celle qui porte ledit plot (3).

3. Plaque selon la revendication 2, caractérisée en ce que ladite cavité ( 17) présente une forme sensiblement tronconique qui s'évase en direction de la face (4) de la plaque opposée à celle qui porte ledit plot (3).

4. Plaque selon la revendication 2, caractérisée en ce que ladite cavité (17) présente une forme sensiblement obtenue par la juxtaposition d'au moins deux troncs de cônes (19,20) dans le prolongement l'un de l'autre, lesquels troncs de cônes (19,20) s'évasent en direction de la face (4) opposée à celle qui porte ledit plot (3) et sont raccordés l'un à l'autre par une surface de raccordement progressif (21), et en ce que la lame élastique (18) est délimitée par ladite surface de verrouillage (16) et par une paroi (6) du tronc de cône (19) dont la section selon un plan transverse au plot (3) présente la plus petite surface.

5. Plaque selon l'une quelconque des revendications 1 à 4, caractérisée en ce que les dimensions de la cavité (17) sont déterminées pour que la lame élastique (18), repoussée par le tube (22) que l'on encliquette, vienne en butée, le cas échéant, contre au moins une paroi (6) de ladite cavité (17) avant de pouvoir céder.

6. Plaque selon l'une quelconque des revendications 1 à 5, caractérisée en ce que, dans la zone de la lame élastique (18), la cavité (17) présente une section selon un plan transverse au premier plot (3), qui est allongée selon une direction sensiblement parallèle à l'axe d'un tube (22) encliqueté au moyen de la région de verrouillage (15) du premier plot (3).

7. Procédé de fabrication par moulage dans un moule en deux parties, caractérisé en ce qu'il permet la réalisation d'une plaque selon l'une quelconque des revendications précédentes, en ce qu'il comporte une étape dans laquelle une matière est introduite dans un moule, une étape de prise du matériau et une étape de démoulage de la plaque, en ce que la première partie de ce moule présente une première empreinte complémentaire, aux retraits près, de la face (2) de la plaque portant ledit plot (3), et en ce que la seconde partie de ce moule présente une seconde empreinte complémentaire, aux retraits près, de la face (4) de la plaque opposée à celle portant ledit plot (3).

8. Procédé selon la revendication 7, caractérisé en ce que ladite seconde empreinte présente au moins une extension de forme complémentaire, aux retraits près, de la cavité (17) de la région de verrouillage (15).

9. Procédé selon la revendication 7 ou 8, caractérisée en ce qu'il comporte en outre une étape de pelliculage de la surface (2) de la plaque qui porte les plots (3).
